# EUROPEAN PATENT SPECIFICATION

(11) **EP 4 505 340 B1**
(45) Date of publication and mention of the grant of the patent: **24.12.2025**
(21) Application number: 23722658.4
(22) Date of filing: 04.04.2023
(51) Int. Cl.: G06F 21/60, H04L 9/00

(54) **SYSTEM FOR MANAGING THE PROCESSING OF A USER' S PERSONAL DETAILS**
SYSTEM ZUR VERWALTUNG DER VERARBEITUNG VON PERSÖNLICHEN DETAILS EINES BENUTZERS
SYSTÈME DE GESTION DU TRAITEMENT DE DONNÉES PERSONNELLES D'UN UTILISATEUR

(30) Priority: 08.04.2022 IT 202200007076
(43) Date of publication of application: 12.02.2025
(73) Proprietor: De Cosmo, Pierluigi Giuseppe, 35121 Padova (IT)
(72) Inventor: De Cosmo, Pierluigi Giuseppe, 35121 Padova (IT)
(74) Representative: Rocchetto, Elena
(86) International application number: PCT/IB2023/053386
(87) International publication number: WO 2023/194888

(56) References cited:
- US-A1- 2019 238 525
- US-A1- 2019 294 817
- US-A1- 2021 390 196

## Description

The present patent concerns data management systems, and more specifically it concerns a new system for managing consent to the processing and the processing of a user's personal details.

The problems relating to the management of data processing consent and privacy in general are known.

Currently, entrusting the management of data processing consent to an entity, such as a healthcare facility, poses the following limitations:
1) Production and collection
   - High costs of documentation production and collection per each individual facility;
   - inconsistency between the produced documents;
   - overall fragmentation of the consent gathered, both in terms of local activities, that is, those conducted by/at the facility in question, and in terms of interchange with other facilities.
2) Application
   - Application of collected consents can only be implemented locally and is difficult to verify;
   - covering all cases is difficult for consent given for local activities and even impossible for exchange activities with other facilities.

**In** conclusion, in addition to management costs, which have to be multiplied for all the facilities, there are also the following drawbacks: inconsistency of the consents collected, their fragmentary nature and the fact that they can only be applied locally, thus significantly reducing the interchange of information.

Information management methods involving the use of a network of interconnected electronic devices are described in documents US 2021/390196A1, US 2019/238525A1, US 2019/294817A1.

Therefore, the subject of the present invention is a new system for managing the processing of personal details.

Entrusting consent management to a central body can solve the problems related to inconsistency, fragmentation and localization, following a few guidelines:
- dealing with consent and privacy in general according to a global view, for example on a regional level with regard to healthcare; in this way, all aspects of the problem can be considered within individual facilities and in exchanges between facilities;
- creating a global architecture of consent documents, using an approach that will be specific according to the type of data, so as to be consistent and all-inclusive;
- using a single IT structure that collects consent to manage data access.

In order to implement this type of consent management, a scalable system has been designed, which can thus be adapted both to the type of consents that need to be managed and to the increase in the number of structures involved in the system.

It is another object of the present invention to provide a system that is compatible with the current management methods, in order to make it easier to adopt said system.

It is another object of the present invention to provide a system that also allows access to and exchange of health information on users, which is not provided for in the current consent systems. At present, in fact, consent to data processing can only be given to a single facility, such as a hospital, which in turn would not be allowed to exchange said information with analysis laboratories, pharmacies, general practitioners, etc.

Some useful definitions to identify the elements that are part of this system are provided here below.

The term "blockchain" is used to identify a set of blocks containing data and also the methods for creating and managing said data.

The term "node" is used to identify individual locations interconnected with each other in a computer network. Said nodes thus comprise electronic devices, such as personal computers or servers, which function according to the applications installed therein.

The term "block" is used to identify a set of data packets.

Said blocks are contained, as explained above, in the blockchain, which is replicated in each of said nodes. In other words, each of said nodes contains a copy of said list of blocks.

The data contained in said blocks are created according to said methods and are subject to approval by the nodes.

In the present invention, said nodes are not equal, that is, they do not all have the same role or importance. In fact, the system includes one or more so-called supervisor nodes, whose task is to verify that the block creation rules are respected.

Said data blocks consist mainly of:
- contracts, particularly for personal data processing, which determine the responsibilities in data processing and hereafter are therefore simply referred to as authorizations;
- references and information on where and how to access the personal data to be processed.

In addition to the supervisor nodes, the present system also includes so-called company nodes, that is, second-level nodes under the control of the supervisor nodes. So-called authorized operators, who become such by signing the relevant authorization, operate on company nodes.

Therefore, at least one operator with an authorization is associated with each company node.

Authorizations may be for operational or consent purposes.

For example, operational authorizations are those that assign the operator the administrative task of acquiring the user's consent, or those that enable the operator to store the data and manage access to the same.

Consent authorizations are those that the user grants to the company node for the specific processing of a certain class of their data.

Operational authorizations are then cascaded from the supervisor node to the company nodes and from the company nodes to other company nodes or the operators. Consent authorizations, on the other hand, originate from the user and go to the company node, and may or may not be usable by other company nodes connected by authorizations. Company nodes may use standard authorizations, created and signed by the supervisor node, meaning authorizations having a predetermined form and content, or create new authorizations using the authorizations received from the supervisor node or other company nodes, always under the control and with the approval of the supervisor node.

To be active, authorizations must be signed by the parties and have an activation date. They may also specify the validity periods of the authorizations and/or the checks to be made regarding the conditions under which the authorization remains active. For instance, one condition may be that the operator's service contract must be still active: in the case where this condition is not met, the authorization will therefore no longer be active.

Privacy data are details of various kinds related to the user, access to which is only allowed with the user's consent.

The actual data may or may not be actually present in the system. In the event that the data is not present, the information required for accessing it, that is, indications of where to find it and how to obtain it, will however be present.

Access to said data therefore takes place in a controlled manner according to the rules defined by the user, who is the owner of the data, and according to the modality envisaged by the company node that has the data itself in its data storage unit or in a connected data storage unit. Since the data can take various forms, that is, it can be digitized according to a certain format, or it can even be data on paper, according to the invention each node, in addition to the blockchain, is also equipped with suitable communication channels, which transmit the data or information in a standardised format compatible with all the other nodes.

In essence, the new management system for personal data processing includes:
- at least one supervisor node NS, which contains said blockchain, the communication channels with one or more further nodes, and which has the function of managing the authorizations, meaning that, based on the authorizations, it determines which nodes can access which data and in what way;
- at least one company node A, which in turn contains said blockchain, the communication channels with one or more further nodes and with one or more data storage units, if any; each company node may access the data if and only if it has received the relevant authorization from said supervisor node NS; furthermore, each node may give authorizations to one or more further company nodes and/or one or more operators; furthermore, each company node may add new authorizations, that is, the consent received from users, subject to the direct or indirect approval of said supervisor node; each company node A accesses its own blockchain, which is an exact copy of all the others contained in the other nodes, including the supervisor node, in order to find out what its authorizations are and thus to find out whether it can access the data, what data it can access and where that data is located.

The system also preferably comprises one or more data storage units S1 S2, ... where the privacy data are stored. Said data storage units may be accessed by one or more of said company nodes, if the latter have the necessary authorizations.

According to an example of application in the Italian healthcare sector, said supervisor node is a regional authority, while the company nodes are the local health organizations, the hospitals and the companies involved in the production and processing of health data for the regional authority.

Therefore, each node, be it a supervisor node or a company node, in turn comprises:
- the blockchain, that is, a set of data blocks, replicated on each node, which contains a set of information and in particular contains all the authorizations in place and the information related to the data being processed, but not the data itself. The information related to the data is the information needed to find the data, that is, where it is located, how to access it and any passwords or access keys;
- communication channels with: one or more supervisor nodes; one or more company nodes, if any; any operators; any data storage units, and in general with the external computer systems through which operators request access to the data, access the data or return the data.

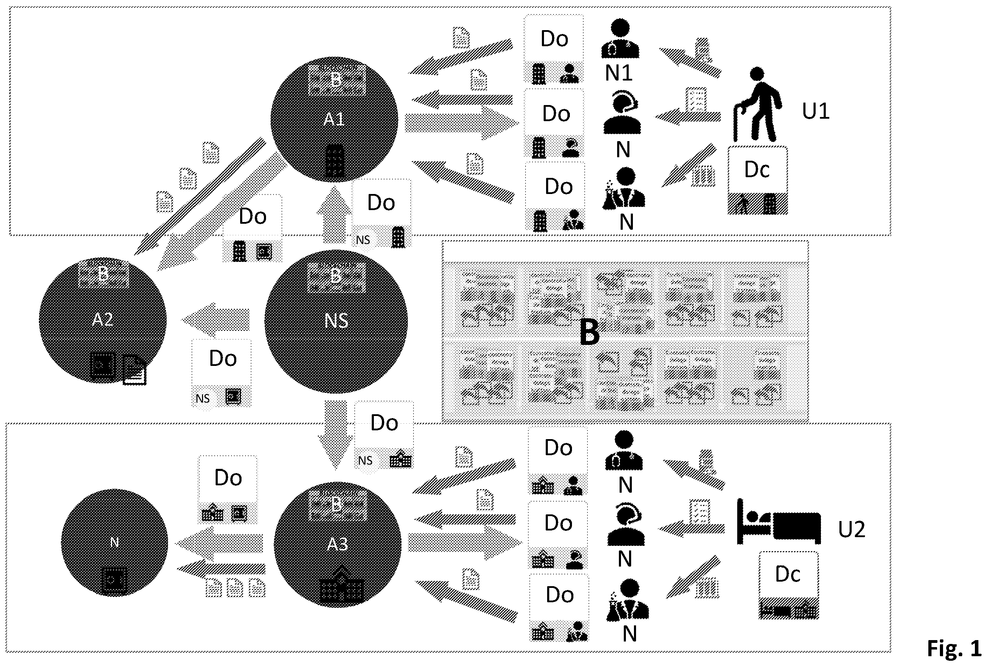

Figure 1 shows a diagram of the new system, where
NS = supervisor node, in this case the regional authority; NS contains a copy of the blockchain B, that is, of the set of information blocks;
A1, A2, A3 = company nodes, in this case ASL *[Italian acronym for Local Health Organization],* regional information system, hospital management organization, respectively; each company node contains a copy of the blockchain B;
U1, U2 = users;
N, N1 = operators of various kinds, such as CUP *[Italian acronym for Centralized Booking Service],* analysis laboratories, general practitioners, hospital reception services, etc.; operators, meaning the electronic devices or terminals used by the operators and connected to the company nodes and/or the supervisor node, do not contain any copy of the blockchain B.

The user U1, U2 must give their consent Dc to an operator N1, N, who in turn must have received an operational authorization Do from the corresponding company node A1, A3. The company nodes A1, A2, A3 must in turn have received an operational authorization Do from the supervisor node NS.

Then, again in order to illustrate the operation and the functions of the new system, let's consider a user U1 who needs a service provided by an ASL, which in this case is the company node A1.

The user U1 contacts an operator N1, giving their consent Dc, which is generated and entered into the system by the operator N1. The operator N1 is in turn authorized to operate by the company node A1, for which they work and which in turn is authorized by the supervisor node NS.

The operator N1 is then authorized to create the authorization for the user U1 for requesting, generating and accessing health data, and enters said authorization into the blockchain B, which is thus continuously updated at all nodes.

Similarly, if an authorization of a company node or an operator of a company node changes, this change is also entered into the blockchain, which is replicated in all of the nodes.

Similarly, the system is used when a new piece of data related to a user, for example a patient, is created, that is, when a new piece of data is created that will itself be considered privacy data.

Making reference again to the example of the healthcare sector, said data can be a medical report or the results of a medical analysis.

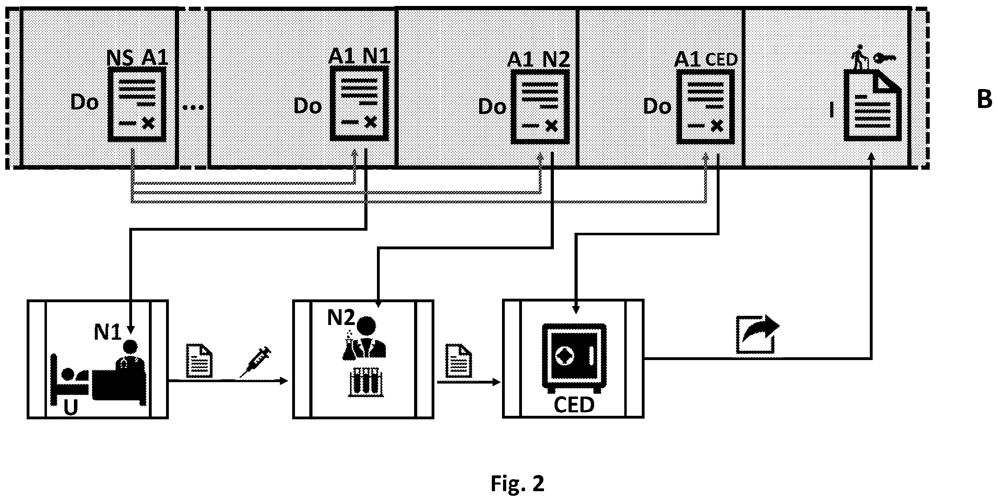

The example is illustrated in Figure 2. The operator N1, who in this case is a doctor in a hospital department, is authorized by the company node A1, which in this case is the hospital, with an operational authorization Do.

The authorization Do of the company node A1, for example, authorizes the authorized operator N1 to request medical analyses for a user U, assisted by the hospital department where said operator works.

The operator N1 sends the request for medical analysis and the biological sample to an analysis laboratory N2.

In turn, the laboratory N2 is authorized by said company node A1, that is, by the hospital, and can therefore receive and process the sample by performing the required analysis.

Once the analysis has been performed and the report produced, the laboratory N2 sends said report to a third party, which in this case is the CED *[Italian acronym for data processing centre],* that is, a data processing centre.

Said third-party CED operator is in turn authorized by the company node A1 to receive, process and deposit the report. Said third-party CED operator also creates the access information I related to the report and enters it into the blockchain B. In the blockchain B, it is thus established in advance which are the operators and the nodes that can intervene in this patient data processing operation and which operators and nodes are not authorized to do so. In addition, the new data is placed in a data storage unit, whereas the data itself is not placed in the blockchain B, which will contain only the details of the type of data, where it is located, and the rules for accessing said data. The advantages resulting from the application of the system that is the subject of the present invention are the following:
1) Implementation of centralized management
   The system is based on at least one supervisor node, so that new blocks can only be entered with the approval of said at least one supervisor node. Once the contracts and the possible access modes have been defined, only this information and details will be distributed and usable in the system, thanks to the fact that all this information is contained in the blockchain, which in turn is replicated in all of the nodes belonging to the system.
2) Scalability and flexibility
   For example, to add a new member facility to this system, it will be sufficient to enter it as a new node of the system and enter the contracts, that is, the authorizations with which it can operate.
   Instead, to add new types of authorizations or consents, it will be sufficient to create and enter the corresponding contracts.
3) Consistent and controlled access to data
   The information needed to access the data is present within the system itself and is managed together with the consent given by the user, meaning the patient, who owns the data, in such a way that access is always consistent and controlled.

In this system, the management of access to each piece of data is data driven, meaning that it is a function of the type of data and its content. The system therefore requires the definition, for each type of data, of operators and structures, that is, of the operators and company nodes that can receive consent to processing and of the reasons for receiving it.

The reasons for data processing are defined by an appropriate contract between the operators and their facilities.

The possible processing consent contracts applicable to the type of data in question are also defined for each facility and each operator.

Once validated, this activity of defining valid contracts on the data type can be used by all the facilities that are part of the system, that is, by all nodes, also for the interchange of data between facilities.

An example is described below for the purpose of better illustrating the new system, without excluding other embodiments that comply with the same innovative concept. At present, no real contract is concluded between a patient and the healthcare organization for access to the data, but the management of said data often takes place based on the implicit need to use it for accounting purposes.

By means of this new system, the user, meaning the patient, can give their consent to the processing of data concerning, for example, the drugs they take, either by filtering the information, for example by giving their consent for only part of the data, or by reducing its accessibility over time, or by granting access to different facilities or levels.

An operator authorized to collect data access consent is, for example, a general practitioner (GP) or a paediatrician working within the public health system.

The consent contract, signed by the patient, preferably contains several items, such as:
1) Object of the consent:
   - All drugs
   - Oncological drugs
   - HIV tracer drugs and methadone
   - sexual choice tracer drugs (hormones)
   - Drugs not covered by the other cases
   - Only drugs supplied by the organization requesting the consent
   - Only drugs prescribed by the doctor requesting the consent
2) Time frame for which consent is granted:
   - All available years
   - Drugs dispensed in the last n years
3) Permitted use:
   - Viewing only
   - Viewing/processing/profiling
   - Anonymised viewing/processing/profiling only.

These items can all be selected or excluded by the user.

Said consent contract may, for example, be available for consultation by the user on their electronic health record, or it may be provided to them in paper form, and they may request its amendment by means of a special request to an operator, for example to the GP or to a territorial service of the local health organization, such as the CUP. Any changes to the consent contract can be collected and uploaded to the blockchain system by the operator (doctor or CUP), who is in turn authorized by the patient, wherein the authorization is validated by the hierarchically higher node.

Moreover, the consent may be different for each of the operators. For example, the hospital doctor may have a different, broader or more limited consent than a specialist doctor.

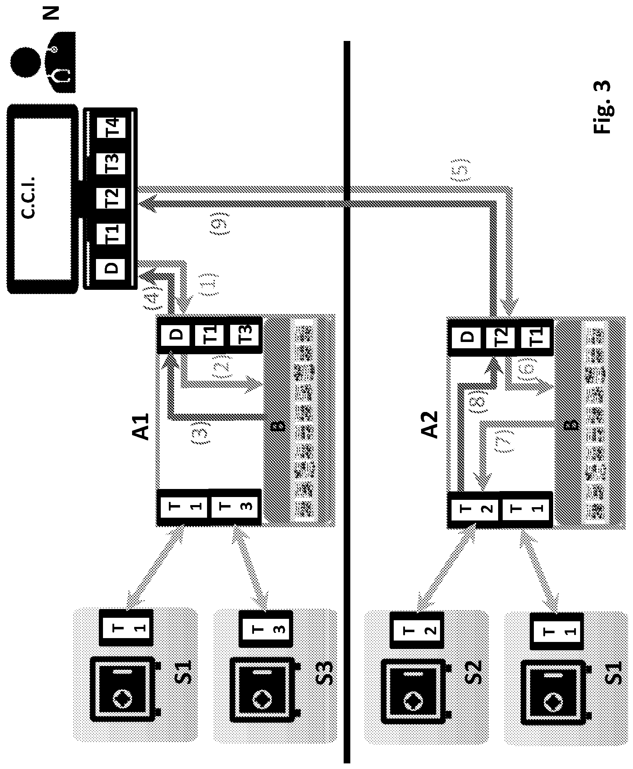

Figure 3 helpfully illustrates with a non-limiting example how any node, be it a supervisor node or a company node, works.

Cardinal numbers and arrows are used to indicate different actions in succession, for example when retrieving a patient's data.
1) An operator N at the company node A1 requests the data available for a user. This request is made via an electronic medium, for example a PC connected to the company node A1, through which the operator accesses, for example, the patient's computerised medical record CCI. This request uses the so-called "Discovery" channel D.
2) The request passes through channel D (Discovery) into the company node A1 and queries the blockchain B.
3) The blockchain B returns the list of available data with the associated access nodes.
4) The list of available data reaches the operator N through the same discovery channel D.
5) For example, the operator has to request an event related to the dispensing of a drug and the request is sent to the company node A2 which manages the storage unit containing the data.
6) For example, the request passes through a second channel T2 and queries the blockchain B of the company node A2 to obtain access.
7) The request is checked and recorded, and the key call is created to access the data which, for example, is located in a data storage unit S2.
8) Data information is returned and sent to the operator's channel T2.
9) The data information is sent to the operator N through the channel T2 in such a way as to give the operator access to the data.

Therefore, with reference to the above description and the attached drawings, the following claims are made.

## Claims

1. Computer system for managing the processing of a user's personal details in said computer system comprising a network of interconnected electronic devices, wherein said computer system furthermore comprises:
- at least one supervisor node (NS);
- one or more company nodes (A) connected to said at least one supervisor node (NS);
wherein each of said nodes in turn comprises:
- at least one electronic device, such as a computer, server or the like;
- a blockchain (B), that is, a collection of information, and wherein said blockchain (B) is identically replicated in each of said nodes (NS, A);
- one or more communication channels (D, T1, T2, ...) suited to transmit said information between each of said nodes (NS, A) and one or more external data storage terminals or external terminals to be used by external operators;
and wherein said information comprises a plurality of authorizations, that is, commands governing the manner in which said company nodes (A) access said information of a user, according to the type of information and the type of node.

2. Computer system according to claim 1, wherein the computer system furthermore comprises one or more terminals used by operators, and wherein said terminals are connected to one or more of said company nodes (A), and wherein the modes for accessing said terminals are governed by said information contained in said blockchain (B).

3. Computer system according to claim 1, wherein the computer system furthermore comprises one or more storage terminals (S1, S2, S3) for the privacy data to be managed, and wherein said terminals are connected to one or more of said company nodes (A), and wherein the modes for accessing said terminals are governed by said information contained in said blockchain (B).

4. Computer system according to the preceding claims, wherein the computer system furthermore comprises a company node (A) configured to perform a step which requests to consult one or more data, and wherein said request step comprises the following steps:
- consultation of said blockchain (B) for the purpose of checking whether said company node (A) and/or one or more of said operator terminals authorized by said company node (A) is/are authorized to access said requested data;
- if so, communication to said company node (A) of the access information that enables access to said data, wherein said access information comprises the information which is useful for finding said data, where it is located, the access modes and any access keys;
and wherein said steps are carried out automatically by means of said electronic devices.

5. Computer system according to claims 1, 2, wherein the computer system furthermore comprises a company node (A) configured to perform a step of entering, adding or replacing one or more data, and wherein said step comprises the following steps:
- consultation of said blockchain (B) for the purpose of checking whether said company node (A) and/or one or more of said operator terminals authorized by said company node (A) is/are authorized to enter one or more of said data;
- if so, entering by said company node (A) and/or said authorized operator terminals of one or more of said data into one or more storage units (S1, S2, ...) belonging or not belonging to said company node (A);
- update of said blockchain (B), which consists in entering the access information for said one or more data in the blockchain itself, and wherein said update is automatically replicated in the blockchains of all the nodes (NS, A) of the system;
and wherein said steps are carried out automatically by means of said electronic devices.

6. Computer system according to the preceding claims, wherein the computer system furthermore comprises a company node (A) configured to perform a step of entering, adding or replacing one or more authorizations into said blockchain (B), and wherein said step comprises the following steps:
- consultation of said blockchain (B) for the purpose of checking whether said company node (A) and/or one or more of said operator terminals authorized by said company node (A) is/are authorized to enter/modify one or more authorizations;
- if so, entering/modification of said one or more authorizations;
- update of said blockchain (B) of the company node (A), which is automatically replicated in the blockchains (B) of all the nodes (NS, A) of the system;
and wherein said steps are carried out automatically by means of said electronic devices.

7. Computer system according to the preceding claims, wherein all the operations performed by said one or more company nodes (A) and/or by said operator terminals are subject to the control of said at least one supervisor node (NS), and wherein said control takes place through consultation of the blockchain (B) and in an automatic manner by means of said electronic devices.

## Patentansprüche

1. Computersystem zum Verwalten der Verarbeitung personenbezogener Daten eines Benutzers im besagten Computersystem, das ein Netzwerk miteinander verbundener elektronischer Vorrichtungen umfasst, wobei das besagte Computersystem ferner Folgendes umfasst:
- mindestens einen Supervisor-Knoten (NS);
- einen oder mehrere Firmenknoten (A), die mit dem besagten mindestens einen Supervisor-Knoten (NS) verbunden sind; wobei jeder der besagten Knoten wiederum Folgendes umfasst:
- mindestens eine elektronische Vorrichtung, wie etwa einen Computer, Server oder dergleichen;
- eine Blockchain (B), d. h. eine Sammlung von Informationen, und wobei die besagte Blockchain (B) in jedem der besagten Knoten (NS, A) identisch repliziert wird;
- einen oder mehrere Kommunikationskanäle (D, T1, T2, ...), die dazu geeignet sind, die besagten Informationen zwischen jedem der besagten Knoten (NS, A) und einem oder mehreren externen Datenspeicherterminals oder externen Terminals, die von externen Bedienern zu verwenden sind, zu übertragen;
und wobei die besagten Informationen eine Vielzahl von Berechtigungen umfassen, d. h. Befehle, die die Art und Weise regeln, in der die besagten Firmenknoten (A) auf die besagten Informationen eines Benutzers gemäß der Art der Informationen und der Art des Knotens zugreifen.

2. Computersystem nach Patentanspruch 1, wobei das Computersystem ferner ein oder mehrere Terminals umfasst, die von Bedienern verwendet werden, und wobei die besagten Terminals mit einem oder mehreren der besagten Firmenknoten (A) verbunden sind, und wobei die Modi für das Zugreifen auf die besagten Terminals durch die besagten Informationen, die in der besagten Blockchain (B) enthalten sind, geregelt werden.

3. Computersystem nach Patentanspruch 1, wobei das Computersystem ferner ein oder mehrere Speicherterminals (S1, S2, S3) für die zu verwaltenden personenbezogenen Daten umfasst, und wobei die besagten Terminals mit einem oder mehreren der besagten Firmenknoten (A) verbunden sind, und wobei die Modi für das Zugreifen auf die besagten Terminals durch die besagten Informationen, die in der besagten Blockchain (B) enthalten sind, geregelt werden.

4. Computersystem nach den vorhergehenden Patentansprüchen, wobei das Computersystem ferner einen Firmenknoten (A) umfasst, der konfiguriert ist, um einen Schritt durchzuführen, der das Abfragen eines Datensatzes oder mehrerer Daten anfordert, und wobei der besagte Anforderungsschritt die folgenden Schritte umfasst:
- Abfrage der besagten Blockchain (B) zum Zweck des Überprüfens, ob der besagte Firmenknoten (A) und/oder ein oder mehrere der besagten Bedienerterminals, die vom besagten Firmenknoten (A) berechtigt werden, berechtigt ist/sind, auf die besagten angeforderten Daten zuzugreifen;
- wenn ja, Kommunikation der Zugriffsinformationen, die den Zugriff auf die besagten Daten ermöglichen, an den besagten Firmenknoten (A), wobei die besagten Zugriffsinformationen die Informationen umfassen, die zum Auffinden der besagten Daten, zu deren Speicherort, zu den Zugriffsarten sowie zu etwaigen Zugriffsschlüsseln nützlich sind;
und wobei die besagten Schritte automatisch mittels der besagten elektronischen Vorrichtungen ausgeführt werden.

5. Computersystem nach Patentanspruch 1, 2, wobei das Computersystem ferner einen Firmenknoten (A) umfasst, der konfiguriert ist, um einen Schritt des Eingebens, Hinzufügens oder Ersetzens eines Datensatzes oder mehrerer Daten durchzuführen, und wobei der besagte Schritt die folgenden Schritte umfasst:
- Abfrage der besagten Blockchain (B) zum Zweck des Überprüfens, ob der besagte Firmenknoten (A) und/oder ein oder mehrere der besagten Bedienerterminals, die vom besagten Firmenknoten (A) berechtigt werden, berechtigt ist/sind, einen Datensatz oder mehrere der besagten Daten einzugeben;
- wenn ja, Eingeben eines Datensatzes oder mehrerer der besagten Daten durch den besagten Firmenknoten (A) und/oder die besagten berechtigten Bedienerterminals in eine oder mehrere Speichereinheiten (S1, S2, ...), die zum besagten Firmenknoten (A) gehören oder nicht;
- Aktualisierung der besagten Blockchain (B), die darin besteht, die Zugriffsinformationen für die besagten einen Datensatz oder mehreren Daten in die Blockchain selbst einzugeben, und wobei die besagte Aktualisierung automatisch in den Blockchains aller Knoten (NS, A) des Systems repliziert wird; und wobei die besagten Schritte automatisch mittels der besagten elektronischen Vorrichtungen ausgeführt werden.

6. Computersystem nach den vorhergehenden Patentansprüchen, wobei das Computersystem ferner einen Firmenknoten (A) umfasst, der konfiguriert ist, um einen Schritt des Eingebens, Hinzufügens oder Ersetzens einer oder mehrerer Berechtigungen in die besagte Blockchain (B) durchzuführen, und wobei der besagte Schritt die folgenden Schritte umfasst:
- Abfrage der besagten Blockchain (B) zum Zweck des Überprüfens, ob der besagte Firmenknoten (A) und/oder ein oder mehrere der besagten Bedienerterminals, die vom besagten Firmenknoten (A) berechtigt werden, berechtigt ist/sind, eine oder mehrere Berechtigungen einzugeben/zu ändern;
- wenn ja, Eingabe/Änderung der besagten einen oder mehreren Berechtigungen;
- Aktualisierung der besagten Blockchain (B) des Firmenknotens (A), die automatisch in die Blockchains (B) aller Knoten (NS, A) des Systems repliziert wird;
und wobei die besagten Schritte automatisch mittels der besagten elektronischen Vorrichtungen ausgeführt werden.

7. Computersystem nach den vorhergehenden Patentansprüchen, wobei alle Vorgänge, die vom besagten einen oder von den besagten mehreren Firmenknoten (A) und/oder von den besagten Bedienerterminals durchgeführt werden, der Steuerung des besagten mindestens einen Supervisor-Knotens (NS) unterliegen, und wobei die besagte Steuerung durch Abfrage der Blockchain (B) und in automatischer Weise mittels der besagten elektronischen Vorrichtungen erfolgt.

## Revendications

1. Système informatique pour la gestion du traitement des données personnelles d'un utilisateur dans ledit système informatique comprenant un réseau de dispositifs électroniques interconnectés, où ledit système informatique comprend en outre :
- au moins un nœud de supervision (NS) ;
- un ou plusieurs nœuds d'entreprise (A) connectés audit au moins un nœud superviseur (NS) ; où chacun desdits nœuds comprend à son tour :
- au moins un dispositif électronique, tel qu'un ordinateur, un serveur ou similaire ;
- une chaîne de blocs (B), c'est-à-dire un ensemble d'informations, et où ladite chaîne de blocs (B) est répliquée de manière identique dans chacun desdits nœuds (NS, A) ;
- un ou plusieurs canaux de communication (D, TI, T2, ...) aptes à transmettre lesdites informations entre chacun desdits nœuds (NS, A) et un ou plusieurs terminaux externes de stockage de données ou terminaux externes destinés à être utilisés par des opérateurs externes ;
et où lesdites informations comprennent une pluralité d'autorisations, c'est-à-dire de commandes régissant la manière dont lesdits nœuds d'entreprise (A) accèdent auxdites informations d'un utilisateur, en fonction du type d'informations et du type de nœud.

2. Système informatique selon la revendication 1, où le système informatique comprend en outre un ou plusieurs terminaux utilisés par des opérateurs, et où lesdits terminaux sont connectés à un ou plusieurs desdits nœuds d'entreprise (A), et où les modes d'accès auxdits terminaux sont régis par lesdites informations contenues dans ladite chaîne de blocs (B).

3. Système informatique selon la revendication 1, où le système informatique comprend en outre un ou plusieurs terminaux de stockage (S1, S2, S3) pour les données de confidentialité à gérer, et où lesdits terminaux sont connectés à un ou plusieurs desdits nœuds d'entreprise (A), et où les modes d'accès auxdits terminaux sont régis par lesdites informations contenues dans ladite chaîne de blocs (B).

4. Système informatique selon les revendications précédentes, où le système informatique comprend en outre un nœud d'entreprise (A) configuré pour effectuer une étape de demande de consultation d'une ou plusieurs données, et où ladite étape de demande comprend les étapes suivantes :
- consultation de ladite chaîne de blocs (B) dans le but de vérifier si ledit nœud d'entreprise (A) et/ou un ou plusieurs desdits terminaux d'opérateurs autorisés par ledit nœud d'entreprise (A) est/sont autorisé(s) à accéder auxdites données demandées ;
- dans l'affirmative, communication audit nœud d'entreprise (A) des informations d'accès qui permet d'accéder auxdites données, où lesdites informations d'accès comprennent les informations utiles pour trouver lesdites données, leur emplacement, les modes d'accès et les clés d'accès éventuelles ;
et où lesdites étapes sont exécutées automatiquement au moyen desdits dispositifs électroniques.

5. Système informatique selon les revendications 1, 2 où le système informatique comprend en outre un nœud d'entreprise (A) configuré pour effectuer une étape de saisie, d'ajout ou de remplacement d'une ou plusieurs données, et où ladite étape comprend les étapes suivantes :
- consultation de ladite chaîne de blocs (B) dans le but de vérifier si ledit nœud d'entreprise (A) et/ou un ou plusieurs desdits terminaux d'opérateurs autorisés par ledit nœud d'entreprise (A) est/sont autorisé(s) à saisir une ou plusieurs desdites données ;
- dans l'affirmative, la saisie par ledit nœud d'entreprise (A) et/ou lesdits terminaux d'opérateurs autorisés d'une ou plusieurs desdites données dans une ou plusieurs unités de stockage (S1, S2, ...) appartenant ou non audit nœud d'entreprise (A) ;
- mise à jour de ladite chaîne de blocs (B), qui consiste à saisir les informations d'accès auxdites une ou plusieurs données dans la chaîne de blocs elle-même, et où ladite mise à jour est automatiquement répliquée dans les chaînes de blocs de tous les nœuds (NS, A) du système ; et où lesdites étapes sont effectuées automatiquement au moyen desdits dispositifs électroniques.

6. Système informatique selon les revendications précédentes, où le système informatique comprend en outre un nœud d'entreprise (A) configuré pour effectuer une étape de saisie, d'ajout ou de remplacement d'une ou plusieurs autorisations dans ladite chaîne de blocs (B), et où ladite étape comprend les étapes suivantes :
- consultation de ladite chaîne de blocs (B) dans le but de vérifier si ledit nœud d'entreprise (A) et/ou un ou plusieurs desdits terminaux d'opérateurs autorisés par ledit nœud d'entreprise (A) est/sont autorisé(s) à saisir/modifier une ou plusieurs autorisations ;
- dans l'affirmative, saisir/modifier lesdites une ou plusieurs autorisations ;
- mise à jour de ladite chaîne de blocs (B) du nœud d'entreprise (A), qui est automatiquement répliquée dans les chaînes de blocs (B) de tous les nœuds (NS, A) du système ;
et où lesdites étapes sont exécutées automatiquement au moyen desdits dispositifs électroniques.

7. Système informatique selon les revendications précédentes, où toutes les opérations effectuées par lesdits un ou plusieurs nœuds d'entreprise (A) et/ou par lesdits terminaux d'opérateur sont soumises au contrôle dudit au moins un nœud de supervision (NS), et où ledit contrôle s'effectue par consultation de la chaîne de blocs (B) et de manière automatique au moyen desdits dispositifs électroniques.
